# EUROPEAN PATENT SPECIFICATION

(11) **EP 2 998 616 B1**
(45) Date of publication and mention of the grant of the patent: **25.11.2020**
(21) Application number: 15185053.4
(22) Date of filing: 14.09.2015
(51) Int. Cl.: F16H 59/02, F16H 61/26, F16H 63/50

(54) **GEAR-SHIFT-OPERATION TRANSMISSION DEVICE AND TRANSMISSION FOR SADDLE-RIDE TYPE VEHICLE**
GETRIEBEVORRICHTUNG FÜR GANGSCHALTVORGANG UND GETRIEBE FÜR EIN SATTELFAHRZEUG
DISPOSITIF DE TRANSMISSION À CHANGEMENT DE VITESSE ET TRANSMISSION POUR VÉHICULE DE TYPE À SELLE

(30) Priority: 16.09.2014 JP 2014188136
(43) Date of publication of application: 23.03.2016
(73) Proprietor: HONDA MOTOR CO., LTD., Tokyo, 107-8556 (JP)
(72) Inventor: Ono, Junya, Saitama 351-0193 (JP); Adachi, Jun, Saitama 351-0193 (JP); Shiomi, Yoshinobu, Saitama 351-0193 (JP); Yamashita, Akihiro, Saitama 351-0193 (JP)
(74) Representative: Beder, Jens

(56) References cited:
- EP-A1- 2 107 278
- DE-A1-102010 015 037
- DE-A1-102012 209 963
- DE-B3-102011 052 494

## Description

This invention relates to a gear-shift-operation transmission device and a transmission for a saddle-ride type vehicle such as a motorcycle.

In some saddle-ride type vehicles such as motorcycles, operating a shift pedal changes shift stages of a transmission. In this type of saddle-ride type vehicle, a shift pedal and a gear-shift operation unit of a transmission body are connected to each other with a gear-shift-operation transmission device such as a shift link. When the driver pushes down or pushes up a shift pedal of the saddle-ride type vehicle by using his/her toe part, this operation is transmitted to a gear-shift operation unit of a transmission body via a gear-shift-operation transmission device. As a result, the shift stage of the transmission is changed.

Moreover, among saddle-ride type vehicles of this type, some are known to include a mechanism capable of instantly changing the shift stage of a transmission without the driver performing clutch engaging/disengaging operation or accelerator returning operation. This mechanism has a sensor capable of detecting a slight movement during a shift operation. When the sensor detects a pushing-up or pushing-down operation on a shift pedal, the mechanism reduces a torque of a power transmission system in the transmission by, for example, cutting the engine ignition. While doing so, the mechanism changes the meshing of gears of the transmission.

There is known a gear-shift-operation transmission device, which is used in such a saddle-ride type vehicle, and which incorporates therein a mechanism configured to detect a slight movement associated with a gear-shift operation on a shift pedal (see, for example, DE 10 2010 015 037) .

In the gear-shift-operation transmission device described in DE 10 2010 015 037, an input-side member connected to a shift pedal and an output-side member connected to a gear-shift operation unit of a transmission body are fitted to each other in a relatively displaceable manner along an axial direction. A pair of springs configured to exert their forces in opposite directions bias the input-side member and the output-side member in such a manner as to maintain the input-side member and the output-side member at their neutral positions. Moreover, a displacement detection sensor configured to detect a relative displacement between the input-side member and the output-side member is provided therebetween.

According to this gear-shift-operation transmission device, when the input-side member and the output-side member are relatively displaced from each other during a pushing-up or pushing-down operation on the shift pedal, the relative displacement can be detected by the displacement detection sensor.

However, since the above-described conventional gear-shift-operation transmission device includes the pair of springs configured to exert its force in opposite directions and bias the input-side member and the output-side member in such a manner as to maintain the input-side member and the output-side member at the neutral positions, this may cause the production cost to increase because the number of parts are large, and may cause the size of the device to increase as a whole. Another gear-shift-operation transmission device is known from DE 10 2011 052 494. It is having a gear lever connection as input side and a transmission connection as output side wherein between input and output side a ramp system with a coupling device and a spring enables to transmit torque. Moreover, a displacement detection sensor is configured to detect the relative displacement between input and output side.

Accordingly, this invention is to provide a gear-shift-operation transmission device and a transmission for a saddle-ride type vehicle having a simple structure capable of biasing an input-side member and an output-side member to neutral positions without complicating the structure, thus enabling reductions in the production cost and in the size of the device as a whole.

### [Means for Solving the Problems]

For the purpose of solving the above-mentioned problems, the gear-shift-operation transmission device for a saddle-ride type vehicle according to this invention is a gear-shift-operation transmission device (28) for a saddle-ride type vehicle, including: an input-side member (29) configured to be connected to a shift pedal (25); an output-side member (30) configured to be connected to a gear-shift operation unit (23) of a transmission body; reaction-force generating means (40) for exerting a compressive reaction force and a tensile reaction force between the input-side member (29) and the output-side member (30); and a displacement detection sensor (39A, 39B) configured to detect a relative displacement between the input-side member (29) and the output-side member (30) against the reaction force from the reaction-force generating means (40). The reaction-force generating means (40) includes: a cam groove (33) provided to at least one of the input-side member (29) and the output-side member (30), and having a compression-side inclined surface (33a) and a tension-side inclined surface (33b) whose inclinations are different from each other with a neutral line (L1) interposed therebetween; and a pressing member (34, 41) provided to the other of the input-side member (29) and the output-side member (30), and configured to be elastically pressed against the cam groove (33).

In this case, when the driver operates the shift pedal (25), a load in a compression direction or a tensile direction is inputted from the shift pedal (25) to the input-side member (29). Thereby, the pressing member (34, 41) positioned at the neutral line position in the cam groove (33) is displaced along the compression-side inclined surface (33a) or the tension-side inclined surface (33b) of the cam groove (33) against the elastic pressing force. At the same time, the load inputted to the input-side member (29) is transmitted to the gear-shift operation unit (23) of the transmission body through the output-side member (30). In this event, the displacement detection sensor (39A, 39B) detects a relative axial displacement between the input-side member (29) and the output-side member (30).

The compression-side inclined surface (33a) and the tension-side inclined surface (33b) are set to have different absolute values of inclination angles to a center axis (c) of the input-side member (29).

Therefore the reaction force varies between when the input-side member (29) and the output-side member (30) are displaced in the compression direction and when the two are displaced in the tensile direction. This makes it possible to change a reaction force during a pushing-down operation on the shift pedal (25) and a reaction force during a pushing-up operation thereon.

The pressing member (34, 41) may include: an abutting part (34) configured to abut against the cam groove (33); and a disc spring (41) configured to bias the abutting part (34) toward the cam groove (33).

In this case, the disc spring (41) having a small thickness elastically presses the abutting part (34) against the cam groove (33).

The pressing member (34, 41) may include: an abutting part (34) configured to abut against the cam groove (33); and a biasing part (41) configured to bias the abutting part (34) toward the cam groove (33). The displacement detection sensor (39A, 39B) and the biasing part (41) may be disposed at the same side of a center axis (c) connecting a connection point (PI) of the input-side member (29) at the shift pedal (25) side to a connection point (P2) of the output-side member (30) at the transmission body side.

In this case, disposing the displacement detection sensor (39A, 39B) and the biasing part (41) at the same side of the center axis (c) reduces the bulging width in a direction orthogonal to the center axis (c). As a result, it is possible to further reduce the size as a whole.

Desirably, the displacement detection sensor (39A, 39B) and the biasing part (41) are provided to the input-side member (29) or the output-side member (30) in such a manner as to be directed to a lateral side of the vehicle, when mounted on the vehicle, and the input-side member (29) and the output-side member (30) are disposed at positions lower than an operation unit of the shift pedal (25), when mounted on the vehicle.

In this case, the displacement detection sensor (39A, 39B) and a housing part of the biasing part (41) hardly interfere with the operation unit of the shift pedal (25) and a foot of the driver during an operation on the shift pedal (25).

For the purpose of solving the above-mentioned problems, the transmission for a saddle-ride type vehicle according to this invention includes any of the above-described gear-shift-operation transmission devices.

### [Effects of the Invention]

According to this invention, the cam groove having the compression-side inclined surface and the tension-side inclined surface is provided to any one of the input-side member and the output-side member, while the pressing members to be elastically pressed against the cam groove are provided to the other of the input-side member and the output-side member. Hence, even though the structure is quite simple, these can bias the input-side member and the output-side member to neutral positions. Thus, this invention enables reductions in the production cost and in the size of the device as a whole.
Fig. 1 is a side view of a transmission according to a first embodiment of this invention.
Fig. 2 is a partial side view of the transmission according to the first embodiment of this invention.
Fig. 3 is a cross-sectional view of a gear-shift-operation transmission device according to the first embodiment of this invention, corresponding to an III-III cross section in Fig. 2
Fig. 4 is a cross-sectional view, similar to that in Fig. 3, of the gear-shift-operation transmission device according to the first embodiment of this invention.
Fig. 5 is a cross-sectional view, similar to that in Fig. 3, of the gear-shift-operation transmission device according to the first embodiment of this invention.
Fig. 6 is a cross-sectional view of a gear-shift-operation transmission device according to a second embodiment of this invention.
Fig. 7 is a cross-sectional view of a gear-shift-operation transmission device according to a third embodiment of this invention.
Fig. 8 is a cross-sectional view of a gear-shift-operation transmission device according to a fourth embodiment of this invention.
Fig. 9 is a cross-sectional view of a gear-shift-operation transmission device according to a fifth embodiment of this invention.

Hereinafter, embodiments of this invention will be described based on the drawings. Note that, in the drawings, the arrow FR indicates a front side of a vehicle, the arrow UP indicate an upper side of the vehicle, and the arrow LH indicates a left side of the vehicle. Moreover, in the following description, up and down, front and rear, as well as right and left mean up and down, front and rear, as well as right and left when a part is mounted on the vehicle, unless otherwise indicated. Further, in each embodiment described below, common parts are denoted by the same reference symbols.

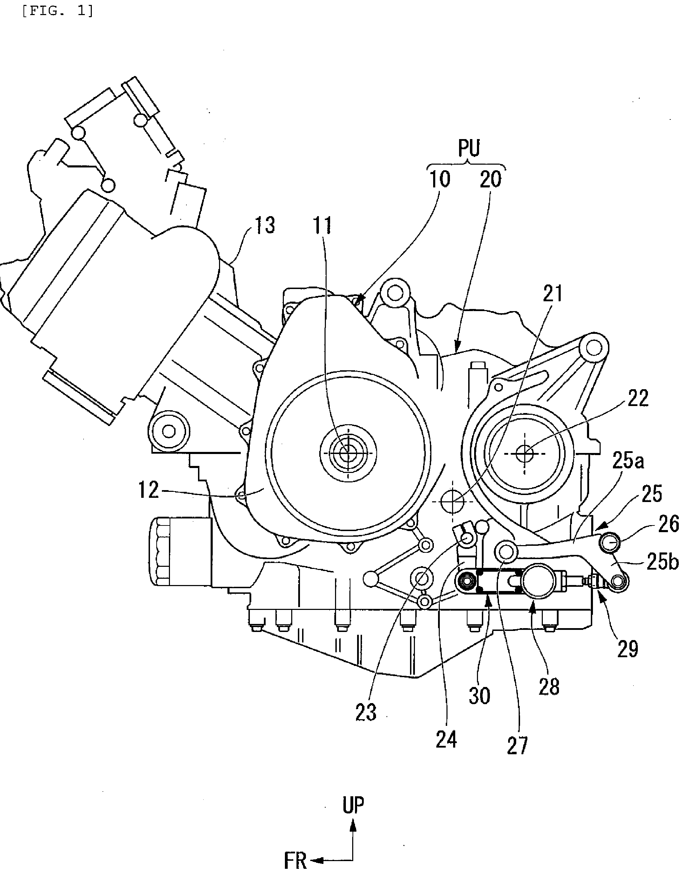

First, a first embodiment illustrated in Figs. 1 to 5 will be described.

Fig. 1 is a view showing a left side surface of a transmission 20 adopted in a motorcycle that is one form of a saddle-ride type vehicle. The transmission 20 of this embodiment is formed integrally with an engine 10 as a power unit PU. In the power unit PU, a crankcase 12 of the engine 10 configured to rotatably support a crankshaft 11 also serves as a transmission case of the transmission 20. At a front upper portion of the crankcase 12, a cylinder part 13 of the engine 10 protrudes upwardly toward the front. A main shaft 21 of the transmission 20 is disposed on a lower side of a rear portion of the crankshaft 11 in the crankcase 12. A countershaft 22 of the transmission 20 is disposed obliquely above a rear portion of the main shaft 21.

A gear-shift operation shaft 23 configured to operate an unillustrated shift drum of the transmission 20 is disposed below a rear portion of a region where the main shaft 21 is installed in the crankcase 12. In this embodiment, the gear-shift operation shaft 23 constitutes a gear-shift operation unit of a transmission body. One end portion of the gear-shift operation shaft 23 protrudes outwardly from a left end surface of the crankcase 12. An input arm 24 is rotatably joined integrally to a left-side protruding portion of the gear-shift operation shaft 23 through serration joining or the like. The input arm 24 extends downwardly in a substantially vertical direction from the gear-shift operation shaft 23.

Moreover, a pivot shaft 26 of a shift pedal 25 is rotatably and pivotally supported on a lower end of a left-side rear portion of the crankcase 12. The shift pedal 25 has an operation arm piece 25a extending to a front side of the vehicle from the pivot shaft 26, and a connection arm piece 25b extending obliquely downward to a rear side of the vehicle from the pivot shaft 26. A pedal shaft 27 (operation unit) protruding outwardly in a vehicle-width direction is supported on an extension end of the operation arm piece 25a.

Further, an end portion of the input arm 24 extending downwardly from the gear-shift operation shaft 23 and an extension end of the connection arm piece 25b of the shift pedal 25 are connected to each other with a gear-shift-operation transmission device 28. The gear-shift-operation transmission device 28 includes an input-side member 29 configured to be rotatably connected to the connection arm piece 25b of the shift pedal 25, and an output-side member 30 configured to be rotatably connected to the input arm 24.

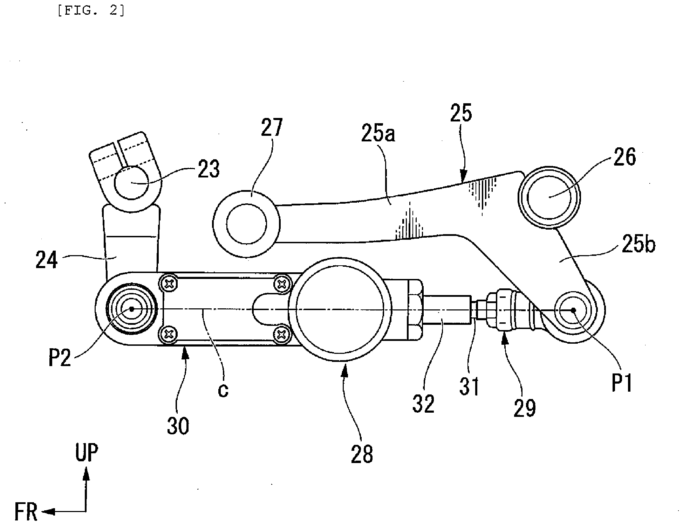

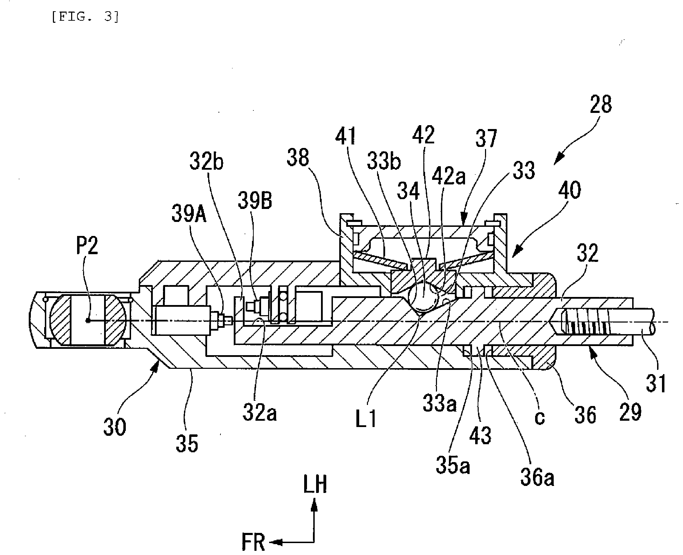

Fig. 2 is a partial side view of the transmission 20 with the gear-shift-operation transmission device 28 located at the center. Figs. 3 to 5 are cross-sectional views of the gear-shift-operation transmission device 28, corresponding to an III-III cross section in Fig. 2. Note that, in this embodiment, a straight line connecting a connection point P1 between the input-side member 29 and the shift pedal 25 to a connection point P2 between the output-side member 30 and the input arm 24 on the transmission 20 side is called a center axis c of the input-side member 29 and the output-side member 30.

As shown in Figs. 2 to 5, the input-side member 29 includes an input rod 31 whose rear end portion has the connection point P1 to the shift pedal 25, and an input block 32 coaxially connected to a front portion of the input rod 31. The input block 32 is provided with a dent portion 32a in a left-side surface of a front edge portion thereof, and also provided with an upright wall 32b at the front end portion, the upright wall 32b being adjacent to the dent portion 32a. In addition, a cam groove 33 is formed in a middle portion of the input block 32 in an axial direction. The cam groove 33 has a compression-side inclined surface 33a and a tension-side inclined surface 33b.

The cam groove 33 is a groove dented to have an approximately V shape whose deepest portion serves as a neutral line L1. A rear-side surface of the cam groove 33 inclined from the neutral line L1 is the compression-side inclined surface 33a, while a front-side surface of the cam groove 33 inclined from the neutral line L1 is the tension-side inclined surface 33b. The cam groove 33 is configured to receive a ball 34, which is an abutting part. The ball 34 will be described later.

Here, an absolute value of an inclination angle of the compression-side inclined surface 33a to the center axis c is not the same as that of the tension-side inclined surface 33b. The absolute value of the inclination angle of the tension-side inclined surface 33b to the center axis c is set to be larger than that of the compression-side inclined surface 33a.

On the other hand, the output-side member 30 has a cylindrical block 35 having a bottomed cylindrical shape whose front end side is provided with the connection point P2 to the input arm 24, and a lid member 36 configured to close an opening at a rear end side of the cylindrical block 35. The cylindrical block 35 houses a portion of the input block 32 of the input-side member 29. The input block 32 slidably penetrates the lid member 36.

Moreover, a holder unit 37 is attached to a left side surface at the rear edge portion side of the cylindrical block 35. The holder unit 37 is configured to hold the aforementioned ball 34 in such a state that the ball 34 is pressed against the cam groove 33. In the holder unit 37, a hollow, disc-shaped case 38 houses a disc spring 41, which is a biasing part. The disc spring 41 is configured to bias, in a protruding direction, a pressing block 42 slidably held at a bottom portion of the case 38. The pressing block 42 has a conically-dented holding groove 42a in a surface at a side facing the inside of the cylindrical block 35, and is capable of holding the ball 34 with the holding groove 42a so that the ball 34 can roll.

The ball 34 held by the pressing block 42 is pressed against the cam groove 33 by receiving a biasing force of the disc spring 41. In an initial state where no external force is applied, the cam groove 33 having the compression-side inclined surface 33a and the tension-side inclined surface 33b in opposite directions with respect to the neutral line L1 moves the input-side member 29 and the output-side member 30 relative to each other in the axial direction in cooperation with a biasing force of the disc spring 41 in such a manner that the ball 34 is positioned on the neutral line L1. In other words, when pressed against the cam groove 33 by receiving a force from the disc spring 41, the ball 34 biases the input-side member 29 and the output-side member 30 toward neutral positions.

In this embodiment, the cam groove 33 and pressing members such as the ball 34 and the disc spring 41 constitute reaction-force generating means 40 for exerting a reaction force between the input-side member 29 and the output-side member 30.

Furthermore, a restriction flange 43 protrudes on an outer circumferential surface of the input block 32.This restriction flange 43 faces restriction walls 35a and 36a of the cylindrical block 35 and the lid member 36 with small gaps thereamong. The restriction flange 43 is configured to restrict a relative displacement in the axial direction between the input-side member 29 and the output-side member 30 by abutting against these restriction walls 35a and 36a.

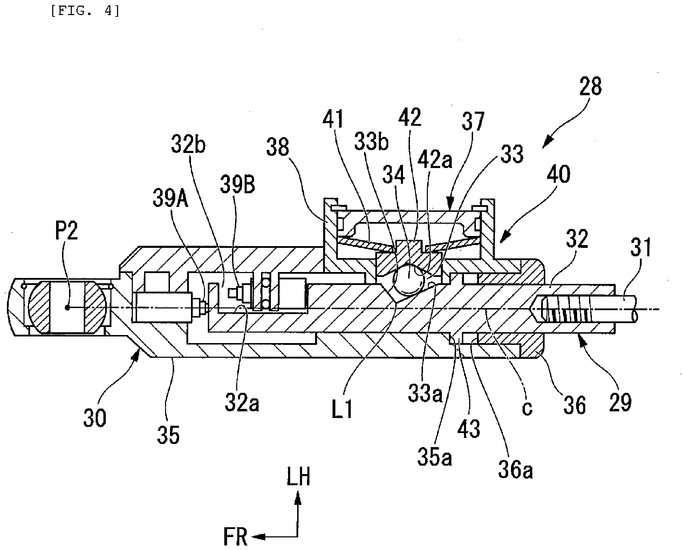

Indeed, when the driver pushes up the shift pedal 25 to exert the operation force in a forward direction (compression direction) on the input block 32 of the input-side member 29, the ball 34 climbs on the compression-side inclined surface 33a of the cam groove 33 as shown in Fig. 4. During the climbing, a reaction force in the axial direction attributable to a biasing force of the disc spring 41 is exerted between the input-side member 29 and the output-side member 30. In this event, the restriction flange 43 abuts against the restriction wall 35a, and thereby restricts the displacement of the input block 32.

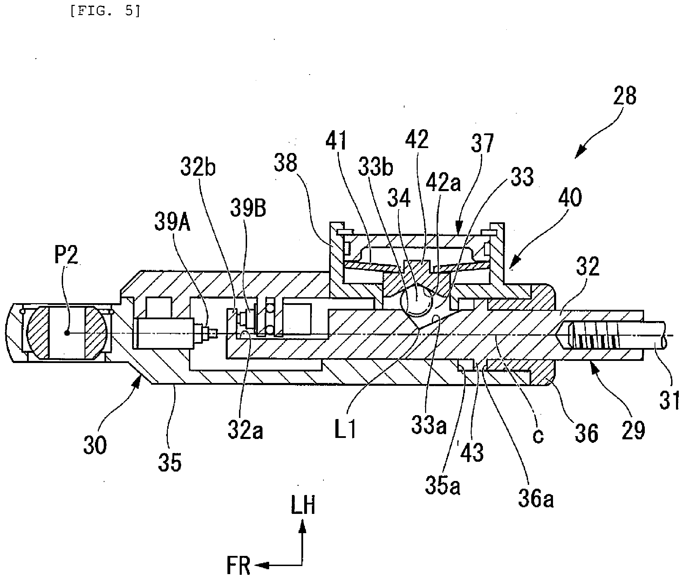

Meanwhile, when the driver pushes down the shift pedal 25 to exert the operation force in a backward direction (tensile direction) on the input block 32, the ball 34 climbs on the tension-side inclined surface 33b of the cam groove 33 as shown in Fig. 5. During the climbing, a reaction force in the axial direction attributable to a biasing force of the disc spring 41 is exerted between the input-side member 29 and the output-side member 30. In this event, the restriction flange 43 abuts against the restriction wall 36a, and thereby restricts the displacement of the input block 32.

Furthermore, inside the cylindrical block 35, micro switches 39A and 39B are installed respectively at a position facing a front surface of the upright wall 32b of the input block 32 and at a position face a rear surface of the upright wall 32b. The micro switches 39A and 39B are displacement detection sensors configured to detect a relative displacement in the axial direction between the input-side member 29 and the output-side member 30. The one micro switch 39A is turned on when the input block 32 is displaced forwardly (compression direction) from a reference position. The other micro switch 39B is turned on when the input block 32 is displaced rearwardly (tensile direction) from the reference position.

Thus, these micro switches 39A and 39B are capable of detecting whether the shift pedal 25 is pushed up or down. Moreover, in this embodiment, the one micro switch 39A is installed at the center of a bottom wall of the cylindrical block 35 in such a manner that the detector faces the front surface of the upright wall 32b, while the other micro switch 39B is installed at a side wall of the cylindrical block 35 in such a manner that the detector faces the rear surface of the upright wall 32b within the dent portion 32a.

Incidentally, for changing the shift stage of the transmission 20, the motorcycle according to this embodiment includes a mechanism capable of changing the shift stage only by the pushing-up or pushing-down operation on the shift pedal 25 without the driver performing clutch engaging/disengaging operation or accelerator returning operation. In this mechanism, a controller determines whether the shift pedal 25 is pushed up or down, on the basis of the detection results by the micro switches 39A and 39B of the gear-shift-operation transmission device 28. When the controller determines that the shift pedal 25 is pushed up or down, the controller reduces a torque of a power transmission system in the transmission 20 by, for example, cutting the engine ignition. While doing so, the controller permits the shift pedal 25 to change the shift stage (change the meshing of gears).

Note that, in this embodiment, the transmission 20 includes the gear-shift operation shaft 23, the input arm 24, and the gear-shift-operation transmission device 28, in addition to the transmission body having the gear shift mechanism.

Moreover, in the gear-shift-operation transmission device 28 of this embodiment, the holder unit 37 configured to hold the disc spring 41 and the ball 34 is installed outside the left surface of the output-side member 30 in such a manner that the holder unit 37 is directed to the outside of the vehicle, when mounted on the vehicle. Further, the gear-shift-operation transmission device 28 is disposed at a position lower than the pedal shaft 27, which is the operation unit of the shift pedal 25, when mounted on the vehicle.

As described above, in the gear-shift-operation transmission device 28 according to this embodiment, the cam groove 33 having the compression-side inclined surface 33a and the tension-side inclined surface 33b is provided to the input-side member 29, while the ball 34 configured to roll on the cam groove 33 and the disc spring 41 configured to press and bias the ball 34 are provided to the output-side member 30, and the input-side member 29 and the output-side member 30 are configured to be biased toward the neutral positions by the cooperation of the ball 34 and the disc spring 41 with the cam groove 33. Hence, even though the structure of the gear-shift-operation transmission device 28 according to this embodiment is quite simple, the input-side member 29 and the output-side member 30 are reliably biased toward the neutral positions, and a gear-shift movement of the shift pedal 25 can be detected by the micro switches 39A and 39B, which are the displacement detection sensors. Thus, adopting the gear-shift-operation transmission device 28 enables reductions in the production cost and in the size of the device as a whole.

Moreover, in the gear-shift-operation transmission device 28 according to this embodiment, the absolute value of the inclination angle of the compression-side inclined surface 33a of the cam groove 33 to the center axis c is set differently from that of the tension-side inclined surface 33b. This makes it possible to vary a reaction force, depending on whether the input-side member 29 and the output-side member 30 are displaced in the compression direction or in the tensile direction.

The gear-shift-operation transmission device 28 is capable of making smaller a reaction force, for example, when the driver pushes up the shift pedal 25 (it is harder for the driver to apply an operation load) than when the driver pushes down the shift pedal 25. Thus, adopting the gear-shift-operation transmission device 28 makes it possible to increase the operability of the transmission 20.

In this embodiment, the disc spring 41 is adopted as the biasing part configured to bias the ball 34 to be pressed against the cam groove 33. The biasing part configured to bias the ball 34 which is to be pressed against the cam groove 33 is not limited to the disc spring 41, and it is possible to adopt other elastic members such as a coil spring and an elastic rubber. Nevertheless, adopting the disc spring 41 as the biasing part as in the case of this embodiment can reduce the space occupied in the biasing direction, hence enabling a reduction in the width of the output-side member 30 bulging in a radial direction. Thus, adopting the structure of this embodiment makes it possible to reduce the width of the gear-shift-operation transmission device 28 bulging in a lateral direction of the vehicle, making the vehicle compact.

Further, in the gear-shift-operation transmission device 28 according to this embodiment, the holder unit 37 configured to hold the disc spring 41 is attached to the cylindrical block 35 in such a manner that the holder unit 37 is directed to a lateral side of the vehicle, when mounted on the vehicle; and the entire gear-shift-operation transmission device 28 is disposed at a position lower than the pedal shaft 27, which is the operation unit of the shift pedal 25, when mounted on the vehicle. Hence, there is an advantage that the holder unit 37 hardly interferes with the pedal shaft 27 and a foot of the driver during a gear-shift operation on the shift pedal 25.

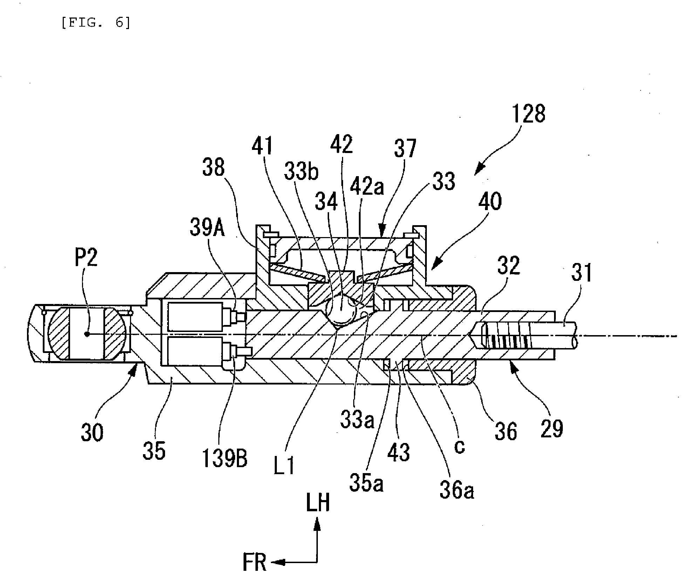

Fig. 6 is a cross-sectional view, similar to that in Fig. 3, of a gear-shift-operation transmission device 128 according to a second embodiment.

The basic configuration of this gear-shift-operation transmission device 128 according to the second embodiment is almost the same as that of the first embodiment. Nevertheless, the structure and the arrangement of a micro switch 139B configured to detect a displacement in the tensile direction of the input-side member 29 are different from those in the first embodiment.

In the gear-shift-operation transmission device 128 according to the second embodiment, the micro switches 39A and 139B configured to detect displacements in the compression direction and the tensile direction of the input-side member 29 are laterally installed side by side at positions corresponding to a tip end surface of the input block 32 in the cylindrical block 35. The one micro switch 39A for detecting the displacement in the compression direction is a switch configured to be turned on when a tip end portion thereof is pressed. Meanwhile, as the other micro switch 139B for detecting the displacement in the tensile direction, adopted is a switch configured to be turned on when a tip end portion thereof is stretched. The tip end portion of the other micro switch 139B is connected to a tip end portion of the input block 32.

Thus, the gear-shift-operation transmission device 128 according to the second embodiment is advantageous in that the same effects as those in the first embodiment can be obtained, and further that the space occupied by the micro switches 39A and 139B in the axial direction can be reduced.

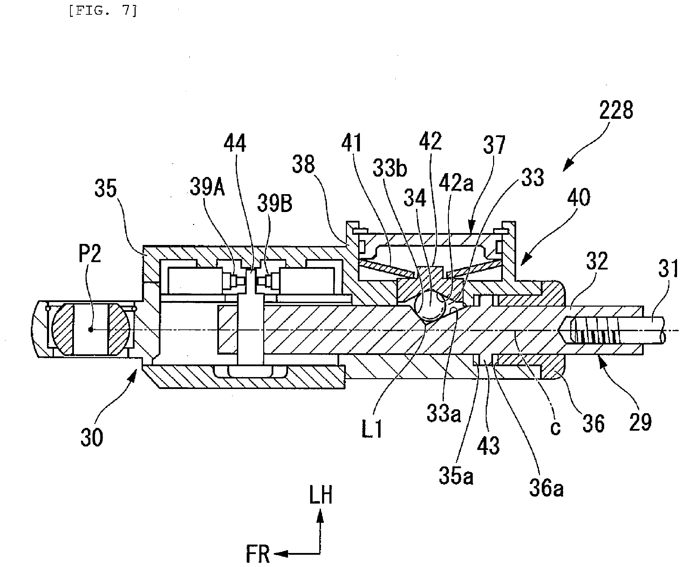

Fig. 7 is a cross-sectional view, similar to that in Fig. 3, of a gear-shift-operation transmission device 228 according to a third embodiment.

The basic configuration of this gear-shift-operation transmission device 228 according to the third embodiment is almost the same as that of the first embodiment. Nevertheless, the arrangement of the micro switches 39A and 39B is different from that in the first embodiment.

In the gear-shift-operation transmission device 228 according to the third embodiment, the micro switches 39A and 39B are aligned in pair on an inner surface of a left-side portion of the cylindrical block 35 of the output-side member 30. Moreover, at the tip end portion of the input block 32 of the input-side member 29, a detection piece 44 protrudes outwardly in the radial direction. The detection piece 44 is disposed between the detectors of the pair of micro switches 39A and 39B.

In this embodiment, the pair of micro switches 39A and 39B, which are the displacement detection sensors, and the holder unit 37 housing the disc spring 41, which is the biasing part, are disposed at the same side (outer side of the vehicle) of the center axis c connecting the connection point P1 at the input-side member 29 side to the connection point P2 at the output-side member 30 side.

Thus, the gear-shift-operation transmission device 228 according to the third embodiment can obtain the same effects as those in the first embodiment, and further makes it possible to simplify the structure at the tip end side of the input block 32. Hence, adopting the gear-shift-operation transmission device 228 according to this embodiment makes it possible to simplify the structure of the gear-shift-operation transmission device 228 and reduce the cost.

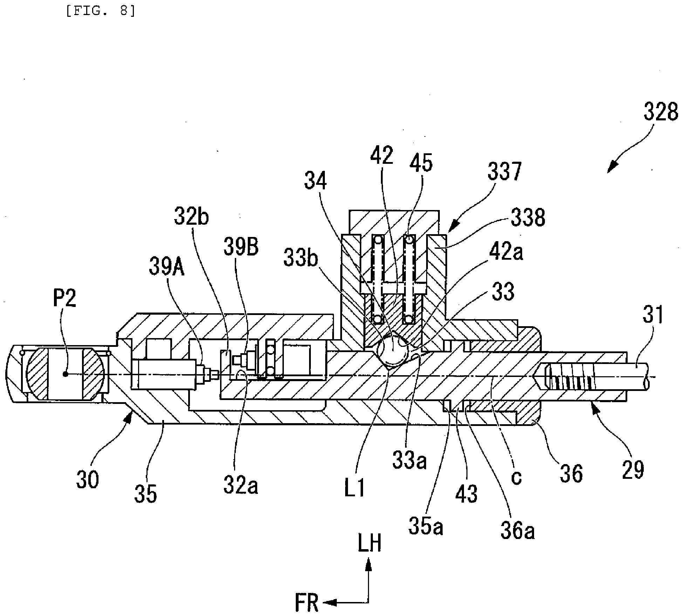

Fig. 8 is a cross-sectional view, similar to that in Fig. 3, of a gear-shift-operation transmission device 328 according to a fourth embodiment.

The basic configuration of this gear-shift-operation transmission device 328 according to the fourth embodiment is almost the same as that of the first embodiment. Nevertheless, a holder unit 337 attached to the cylindrical block 35 is different from one in the first embodiment. In the holder unit 337 of this embodiment, the pressing block 42 holding the ball 34 is slidably fitted into a case 338, and a coil spring 45 is disposed inside the case 338. The coil spring 45 is a biasing part configured to bias the ball 34 with the pressing block 42.

The gear-shift-operation transmission device 328 according to the fourth embodiment is advantageous in that the same effects as those in the first embodiment can be obtained, and further that adopting the coil spring 45 as the biasing part configured to bias the ball 34 makes it possible to enhance the setting precision of a biasing

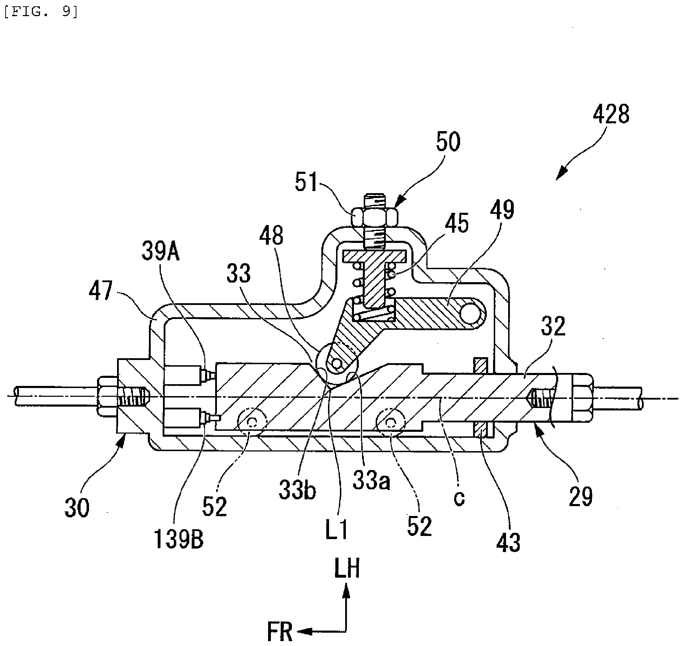

Fig. 9 is a cross-sectional view, similar to that in Fig. 3, of a gear-shift-operation transmission device 428 according to a fifth embodiment.

In the gear-shift-operation transmission device 428 according to the fifth embodiment, a front portion side of the input block 32 constituting the input-side member 29 is inserted in a hollow output block 47 constituting the output-side member 30, and a rotatable cam roller 48 is configured to be pressed against the cam groove 33 formed in the side surface of the input block 32. The cam roller 48 is rotatably supported by a tip end portion of a swing arm 49 swingably supported in the output block 47. The coil spring 45 is configured to bias the swing arm 49 in a direction in which the cam roller 48 is pressed against the cam groove 33. Moreover, the coil spring 45 is supported by a thrust adjustment mechanism 50 attached to the output block 47. The biasing force on the cam roller 48 can be adjusted by operating an adjustment nut 51 of the thrust adjustment mechanism 50 from the outside of the output block 47. Further, the same pair of micro switches 39A and 139B as those in the second embodiment are attached to positions facing the tip end surface of the input block 32 in the output block 47.

Note that reference numeral 52 in Fig. 9 denotes a support roller rotatably supported by the input block 32 and configured to abut against an inner surface of the output block 47 to receive a pressing force inputted from the cam roller 48 to the input block 32.

The gear-shift-operation transmission device 428 according to the fifth embodiment is advantageous in that almost the same basic effects as those in the fourth embodiment can be obtained, and further that it is possible to further enhance the setting precision of a reaction force because the cam roller 48 supported by the swing arm 49 is stably pressed against the cam groove 33, and also because the thrust adjustment mechanism 50 is capable of fine adjustment of the biasing force of the coil spring 45.

It should be noted that this invention is not limited to the above-described embodiments, and various design modifications are possible within the scope of the appended claims. For example, in the above embodiments, the cam groove 33 is provided on the input-side member 29 side, while the pressing member to be elastically pressed against the cam groove 33 is provided on the output-side member 30 side. In contrast, the cam groove may be provided on the output-side member side, while the pressing member may be provided on the input-side member side.

Moreover, in the above embodiments, the displacement detection sensors configured to detect a relative displacement between the input-side member 29 and the output-side member 30 are constituted of the micro switches 39A and 39B (139B). Nevertheless, the displacement detection sensors are not limited thereto, and may be constituted of, for example, a proximity sensor or the like.

Further, the vehicle to which this invention is applied is not limited to motorcycles (including motorized bicycles and scooter-type vehicles), and also includes small vehicles with three wheels (including a vehicle with one front wheel and two rear wheels and a vehicle with two front wheels and one rear wheel) or four wheels.
20 TRANSMISSION
23 GEAR-SHIFT OPERATION SHAFT (GEAR-SHIFT OPERATION UNIT OF TRANSMISSION BODY)
25 SHIFT PEDAL
27 PEDAL SHAFT (OPERATION UNIT OF SHIFT PEDAL)
28, 128, 228, 328, 428, GEAR-SHIFT-OPERATION TRANSMISSION DEVICE
29 INPUT-SIDE MEMBER
30 OUTPUT-SIDE MEMBER
33 CAM GROOVE
33a COMPRESSION-SIDE INCLINED SURFACE
33b TENSION-SIDE INCLINED SURFACE
34 BALL (ABUTTING PART)
39A, 39B, 139B MICRO SWITCH (DISPLACEMENT DETECTION SENSOR)
40 REACTION-FORCE GENERATING MEANS
41 DISC SPRING (BIASING PART)
45 COIL SPRING (BIASING PART)
c CENTER AXIS
L1 NEUTRAL LINE
PI, P2 CONNECTION POINT

## Claims

1. A gear-shift-operation transmission device (28) for a saddle-ride type vehicle, comprising:
an input-side member (29) configured to be connected to a shift pedal (25);
an output-side member (30) configured to be connected to a gear-shift operation unit (23) of a transmission body;
reaction-force generating means (40) for exerting a force between the input-side member (29) and the output-side member (30); and
a displacement detection sensor (39A, 39B) configured to detect a relative displacement;
wherein the reaction-force generating means (40) comprises:
a cam groove (33) provided to at least one of the input-side member (29) and the output-side member (30), and having a compression-side inclined surface (33a) and a tension-side inclined surface (33b) whose inclinations are different from each other with a neutral line (L1) interposed therebetween;
a pressing member (34, 41) provided to the other of the input-side member (29) and the output-side member (30), and configured to be elastically pressed against the cam groove (33); and
**characterized in**
**that** the reaction-force generating means (40) is configured to exert a compressive reaction force and a tensile reaction force between the input-side member (29) and the output-side member (30);
**that** the displacement detection sensor (39A, 39B) is configured to detect a relative axial displacement between the input-side member (29) and the output-side member (30) against the reaction force from the reaction-force generating means (40); and
**that** the compression-side inclined surface (33a) and the tension-side inclined surface (33b) are set to have different absolute values of inclination angles to a center axis of the input-side member (29).

2. The gear-shift-operation transmission device for a saddle-ride type vehicle according to claim 1, wherein the pressing member (34, 41) includes:
an abutting part (34) configured to abut against the cam groove (33); and
a disc spring (41) configured to bias the abutting part (34) toward the cam groove (33).

3. The gear-shift-operation transmission device for a saddle-ride type vehicle according to any one of claims 1 to 2, wherein the pressing member (34, 41) includes:
an abutting part (34) configured to abut against the cam groove (33); and
a biasing part (41) configured to bias the abutting part (34) toward the cam groove (33), and
the displacement detection sensor (39A, 39B) and the biasing part (41) are disposed in a same radial direction from a center axis (c) connecting a connection point (P1) of the input-side member (29) at the shift pedal (25) side to a connection point (P2) of the output-side member (30) at the transmission body side.

4. A vehicle with the gear-shift-operation transmission device for a saddle-ride type vehicle according to claim 3, wherein
the displacement detection sensor (39A, 39B) and the biasing part (41) are provided to the input-side member (29) or the output-side member (30) in such a manner as to be directed to a lateral side of the vehicle, when mounted on the vehicle, and
the input-side member (29) and the output-side member (30) are disposed at positions lower than an operation unit of the shift pedal (25), when mounted on the vehicle.

5. A transmission for a saddle-ride type vehicle, comprising the gear-shift-operation transmission device according to any one of claims 1 to 4.

## Patentansprüche

1. Gangwechsel-Betätigung-Getriebevorrichtung (28) für ein Fahrzeug vom Sattelfahrtyp, umfassend:
ein eingangseitiges Element (29), das eingerichtet ist um mit einem Schalthebel (25) verbunden zu werden;
ein ausgangseitiges Element (30), das eingerichtet ist um mit einer Gangwechsel-Betätigungseinheit (23) eines Getriebekörpers verbunden zu werden;
Reaktionskrafterzeugungsmittel (40) zum Ausüben einer Kraft zwischen dem eingangsseitigen Element (29) und dem ausgangsseitigen Element (30); und
einen Verschiebung-Erfassungssensor (39A, 39B), der eingerichtet ist um eine relative Verschiebung zu erfassen;
wobei das Reaktionskrafterzeugungsmittel (40) umfasst:
eine Nockennut (33), die für wenigstens das eingangsseitige Element (29) oder das ausgangsseitige Element (30) vorgesehen ist und die eine kompressionsseitige geneigte Fläche (33a) und eine spannungsseitige geneigte Fläche (33b) hat, deren Neigungen verschieden voneinander sind mit einer dazwischenliegenden Neutrallinie (L1);
ein Druckelement (34,41) welches für das jeweils andere eingangsseitige Element (29) bzw. ausgangsseitige Element (30) vorgesehen ist und das eingerichtet ist elastisch gegen die Nockennut (33) gepresst zu werden; und
**dadurch gekennzeichnet,**
**dass** das Reaktionskrafterzeugungsmittel (40) eingerichtet ist um eine Kompressionsreaktionskraft und eine Spannungsreaktionskraft zwischen dem eingangsseitigen Element (29) und dem ausgangsseitigen Element (30) auszuüben;
**dass** der Verschiebung-Erfassungssensor (39A, 39B) eingerichtet ist um eine relative, axiale Verschiebung zwischen dem eingangsseitigen Element (29) und dem ausgangsseitigen Element (30) gegen die Reaktionskraft des Reaktionskrafterzeugungmittels (40) zu erfassen; und
**dass** die kompressionsseitige geneigte Fläche (33 a) und die spannungseitige geneigte Fläche (33b) so eingestellt sind, dass sie verschiedene Absolutwerte von Neigungswinkeln zu einer Mittelachse des eingangsseitigen Elements (29) haben.

2. Gangwechsel-Betätigung-Getriebevorrichtung für ein Fahrzeug vom Sattelfahrtyp gemäß Anspruch 1, wobei das Druckelement (34,41) aufweist:
ein Anlageteil (34), das eingerichtet ist an der Nockennut (33) anzuliegen; und
eine Scheibenfeder (41), die eingerichtet ist um den Anlageteil (34) gegen die Nockennut (33) vorzuspannen.

3. Gangwechsel-Betätigung-Getriebevorrichtung für ein Fahrzeug vom Sattelfahrtyp gemäß einem der Ansprüche 1 oder 2, wobei das Druckelement (34, 41) aufweist:
ein Anlageteil (34), das eingerichtet ist, an der Nockennut (33) anzuliegen; und
ein Vorspannteil (41), das eingerichtet ist das Anlageteil (34) gegen die Nockennut (33) vorzuspannen, und
der Verschiebung-Erfassungssensor (39A, 39B) und das Vorspannteil (41) in derselben radialen Richtung von einer Mittelachse (c) angeordnet sind, die einen Verbindungspunkt (P1) des eingangsseitigen Elements (29) auf der Seite des Schalthebels (25) mit einem Verbindungspunkt (P2) des ausgangsseitigen Elements (30) auf der Seite des Getriebekörpers verbindet.

4. Fahrzeug mit einer Gangwechsel-Betätigung-Getriebevorrichtung für ein Fahrzeug vom Sattelfahrtyp gemäß Anspruch 3, wobei
der Verschiebung-Erfassungssensor (39 A, 39 B) und das Vorspannteil (41) an dem eingangsseitigen Element (29) oder dem ausgangsseitigen Element (30) in einer solchen Weise vorgesehen sind, dass sie auf die laterale Seite des Fahrzeugs gerichtet sind, wenn sie an dem Fahrzeug montiert sind und
das eingangsseitige Element (29) und das ausgangsseitige Element (30) an Positionen angeordnet sind, die tiefer als eine Betätigungseinheit des Schalthebels (25) sind, wenn sie an dem Fahrzeug montiert sind.

5. Getriebe für ein Fahrzeug vom Sattelfahrtyp, umfassend die Gangwechsel-Betätigung-Getriebevorrichtung gemäß einem der Ansprüche 1 bis 4.

## Revendications

1. Dispositif de transmission à changement de vitesse (28) pour un véhicule de type à selle comprenant :
un élément du côté de l'entrée (29) configuré pour être raccordé à une pédale de changement de vitesse (25) ;
un élément du côté de la sortie (30) configuré pour être raccordé à une unité de changement de vitesse (23) d'un corps de transmission ;
un moyen de génération de force de réaction (40) pour exercer une force entre l'élément du côté de l'entrée (29) et l'élément du côté de la sortie (30) ; et
un capteur de détection de déplacement (39A, 39B) configuré pour détecter un déplacement relatif ;
dans lequel le moyen de génération de force de réaction (40) comprend :
une rainure de came (33) prévue sur au moins l'un parmi l'élément du côté de l'entrée (29) et l'élément du côté de la sortie (30), et ayant une surface inclinée du côté de la compression (33a) et une surface inclinée du côté de la tension (33b) dont les inclinaisons sont différentes l'une de l'autre avec une ligne neutre (L1) intercalée entre elles ;
un élément de pression (34,41) prévu sur l'autre parmi l'élément du côté de l'entrée (29) et l'élément du côté de la sortie (30), et configuré pour être élastiquement comprimé contre la rainure de came (33) ; et
**caractérisé** :
**en ce que** le moyen de génération de force de réaction (40) est configuré pour exercer une force de réaction de compression et une force de réaction de tension entre l'élément du côté de l'entrée (29) et l'élément du côté de la sortie (30) ;
**en ce que** le capteur de détection de déplacement (39A, 39B) est configuré pour détecter un déplacement axial relatif entre l'élément du côté de l'entrée (29) et l'élément du côté de la sortie (30) contre la force de réaction provenant du moyen de génération de force de réaction (40) ; et
**en ce que** la surface inclinée du côté de la compression (33a) et la surface inclinée du côté de la tension (33b) sont réglées pour avoir des valeurs absolues différentes d'angles d'inclinaison par rapport à un axe central de l'élément du côté de l'entrée (29).

2. Dispositif de transmission à changement de vitesse pour un véhicule de type à selle selon la revendication 1, dans lequel l'élément de pression (34, 41) comprend :
une partie de butée (34) configurée pour venir en butée contre la rainure de came (33) ; et
un ressort de disque (41) configuré pour solliciter la partie de butée (34) vers la rainure de came (33).

3. Dispositif de transmission à changement de vitesse pour un véhicule de type à selle selon l'une quelconque des revendications 1 à 2, dans lequel l'élément de pression (34, 41) comprend :
une partie de butée (34) configurée pour venir en butée contre la rainure de came (33) ; et
une partie de sollicitation (41) configurée pour solliciter la partie de butée (34) vers la rainure de came (33), et
le capteur de détection de déplacement (39A, 39B) et la partie de sollicitation (41) sont disposés dans la même direction radiale à partir d'un axe central (c) raccordant un point de raccordement (P1) de l'élément du côté de l'entrée (29) au niveau du côté de la pédale de changement de vitesse (25) jusqu'à un point de raccordement (P2) de l'élément du côté de la sortie (30) au niveau du côté du corps de transmission.

4. Véhicule avec le dispositif de transmission à changement de vitesse pour un véhicule de type à selle selon la revendication 3, dans lequel :
le capteur de détection de déplacement (39A, 39B) et la partie de sollicitation (41) sont prévus sur l'élément du côté de l'entrée (29) ou l'élément du côté de la sortie (30) afin d'être dirigés vers un côté latéral du véhicule, lorsqu'ils sont montés sur le véhicule, et
l'élément du côté de l'entrée (29) et l'élément du côté de la sortie (30) sont disposés dans des positions inférieures à une unité opérationnelle de la pédale de changement de vitesse (25), lorsqu'ils sont montés sur le véhicule.

5. Transmission pour un véhicule de type à selle comprenant le dispositif de transmission à changement de vitesse selon l'une quelconque des revendications 1 à 4.
